# EUROPEAN PATENT APPLICATION

(11) **EP 2 239 287 A1**
(43) Date of publication of application: **13.10.2010**
(21) Application number: 09157641.3
(22) Date of filing: 08.04.2009
(51) Int. Cl.: C08G 18/36, C08G 18/40, C08G 18/42, C08G 18/66

(54) **Process for preparing a flexible polyurethane foam**

(71) Applicant: Recticel, 1140 Brussel (Evere) (BE)
(72) Inventor: Parmentier Hans, 8560 Moorsele (BE); Van Tittelboom Peter, 9230 Wetteren (BE); Persijn Bart, 9820 Merelbeke (BE); Termont An, 9290 Overmere (BE); Ledoux Nele, 9810 Eke (BE)
(74) Representative: Van Reet, Joseph

(57) **Abstract**

The process comprises preparing a reaction mixture from a polyisocyanate component and from a polyol component which comprises one or more polyester polyols formed from at least one dimer fatty acid and/or at least one dimer fatty alcohol. In order to improve the processability of the polyurethane flexible foams so that these foams can be produced with the desired hardness and mechanical properties over a broad density range, the isocyanate reactive compounds contain, per 100 parts by weight thereof, 25 to 95 parts by weight of said polyester polyols and 5 to 75 parts by weight of one or more polyether polyols which are free of dimer fatty chains. In this way, no lipophilic filler is needed so that the fogging and emission properties of the foam can be improved. Moreover, softer foam can be produced without having to apply a too low NCO index resulting in better mechanical properties and in particular in a lower compression set. Finally, higher foam densities can be achieved with an isocyanate component having a lower functionality so that the hardness of these foams can be reduced.

## Description

The present invention relates to a process for preparing a flexible polyurethane foam. The process comprises preparing a reaction mixture from a polyisocyanate component and from a polyol component comprising one or more polyester polyols formed from at least one dimer fatty acid and/or at least one dimer fatty alcohol.

The present invention is intended to be able to include a substantial amount of renewable carbon, i.e. carbon originating from renewable resources such as plants or animals, into different types of flexible polyurethane foams, in particular into flexible polyurethane foams of different densities. These foams should also have good mechanical properties such a tensile strength, tear resistance and compression set.

Most flexible polyurethane foams are based upon the reaction of diisocyanates with polyether or polyester diols or triols. The earliest production of low density flexible foam was based upon slightly-branched polyester polyols (poly diethylene adipates) and TDI. Polyester-based foams of this type are still produced, but over 90% of all flexible polyurethane foam production is now based upon polyether polyols. A drawback of polyester-based foams is indeed that, because of the ester bonds, they tend to hydrolyze and, accordingly, are unacceptable for certain usages, for example where the foams are subjected to moist or humid environments. Polyester-based polyurethane foams have in other words bad humid ageing properties. On the other hand, in contrast to polyether-based foams, polyester-based polyurethane foams have good flame laminating characteristics and also better mechanical properties, for example a better tear resistance, tensile strength and tensile elongation.

US 4 264 743 discloses polyurethane foams made from hydrophobic polyester polyols, more particularly from polyols derived from a dimer fatty acid. The dimer fatty acid is a dicarboxylic acid prepared by dimerization of a monobasic fatty acid (generally having a carbon number of 18) through carbon-carbon covalent bonds, whose molecular weight is just twice that of the starting material. Due to the hydrophobic properties of these foams, they have better humid ageing properties compared to conventional polyester-based foams.

An important advantage of the foams disclosed in US 4 264 743 is moreover that they have a high content of renewable carbon, since the dimer acid used to produce the dimer acid polyester polyol can be made from natural sources, more particular from vegetable oil. A problem with these foams is however their poor processability. In addition, the density of the foam is to be tuned to around 50 kg/m³. Foams with lower densities tend to show internal splits, foams with higher density lead to shrinkage. To improve the foam processing margin, the addition of lipophilic fillers such as mineral oils was found to be helpful. These lipophilic fillers increase the air permeability of the foam and thus allow higher foam densities. However, these additives deteriorate foam properties such as fogging, emission, odour, compression set and cost price.

The present inventors have done tests from which it appeared that by using a polyol which consists entirely of a dimer acid based polyester polyol, it was not possible to produce a foam with a density of about 42 kg/m³ without having the problem of internal splits. By adding 30 parts by weight (per 100 parts by weight of polyester polyol) of a lipophilic filler, it was possible to produce a polyurethane foam without internal splits and without shrinking problems but only within a density range of between about 45 and 65 kg/m³.

These findings also appear from the prior art patents. The polyurethane foams produced without lipophilic filler in Examples 1, 2 and 5 of US 4 264 743 have densities of between 48 and 50 kg/m³ and the foams produced with 30 parts by weight of lipophilic filler (and with 100% dimer acid derived polyol) have densities of 48 to 62 kg/m³. In Examples 10 and 18, higher foam densities of between 85 and 107 kg/m³ were obtained but this with the use of 100 to 200 parts of lipophilic filler per 100 parts of polyol. Moreover, the dimer acid derived polyol used in these examples was not a polyester polyol but a polyether polyol. Lower foam densities of between 32, 40 and 28 kg/m³ were obtained in Comparative Examples 1 to 3 but this with a conventional polyether or polyester polyol.

In US 5 527 834 five examples of foams made with a 100% dimer acid polyester polyol are given, namely comparative examples 8 to 12. The foam densities ranged from 43 to 51 kg/m³.

In US 2006/0213608, a number of foam formulations based on a 100% dimer acid polyester polyol are given, producing foams within the range of 48 - 55 kg/m³. One example of a foam with a higher density is given, namely example 6 with a foam density of 100 kg/m³. This polyurethane foam is however made with polymeric MDI having a high functionality of 2.7. Moreover, a very low NCO index of 0.80 was used in order to be able to produce a foam having such a high density. Such a low NCO index results in bad mechanical properties, in particular in a low tensile strength and tear resistance. Notwithstanding the fact that a very low NCO index was used in this example in order to achieve a softer foam, the produced foam was still quite rigid and had more particularly a compression force (or load) deflection of 20 kPa.

As disclosed in US 5 527 834 a further drawback of foams which are based on a dimer acid polyester polyol is that they have compression set properties which are not that good and which are even bad when they contain a lipophilic filler. In comparative Example 12 (without lipophilic filler), the compression set of the foam was 7% and in comparative Examples 8 to 11 (with lipophilic filler), 15 and 20%. With the foam formulations disclosed in US 2006/0213608, the compression set values will even be worse since in these formulations a very low NCO index is applied, more particularly an NCO index lower than 0.90. In this way, the three-dimensional foam network is broken so that a softer foam is obtained as taught in US 2006/0213608 but at the same time the compression set will of course be worse.

US 5 527 834 also discloses that the lipophilic filler is not only used to render the foam more water-repellent but that it is used in the first place to improve the foam properties, more particularly to make a homogeneous foam with fine cells. This is explained as being due to the fact that the hydrophobic dimer acid polyester polyol is compatible with the lipophilic filler so that a good workability is achieved in preparing the foamable composition.

An object of the present invention is to improve the processability of polyurethane flexible foams, based on polyester polyols derived from at least a dimer fatty acid and/or at least a dimer fatty alcohol so that these foams can be produced with the desired hardness and mechanical properties over a broad density range, with the use of only a small amount of a lipophilic filler or even not requiring the use of a lipophilic filler.

The process according to the invention is characterised to this end in that the isocyanate reactive compounds contain, per 100 parts by weight thereof, 25 to 95 parts by weight of dimer fatty acid and/or dimer fatty alcohol based polyester polyols and 5 to 75 parts by weight of one or more polyether polyols which are free of dimer fatty chains, in that the reaction mixture is composed to comprise no lipophilic filler or, per 100 parts by weight of said isocyanate reactive compounds, at the most 35 parts by weight thereof and in that a blowing agent is added to the reaction mixture in such an amount that the flexible foam has a density comprised between 20 and 150 kg/m³.

In the prior art documents discussed hereabove, the hydrophobic polyester polyol was obtained by means of a dimer fatty acid. The polyester polyols used in the process according to the present invention may however also be made by means of a dimer fatty alcohol, which may be obtained for example by hydrogenation of the corresponding dimer fatty acid.

Compared to such dimer acid or dimer fatty alcohol based polyester polyols, the polyether polyol is much less hydrophobic (i.e. more hydrophilic) due to the absence of any hydrophobic dimer fatty chains. The polyether polyol has also a much lower viscosity. Notwithstanding these different physical properties, i.e. notwithstanding possible compatibility problems, it has been found quite by surprise that by using the less hydrophobic polyether polyol in the claimed amounts in combination with the dimer fatty acid or dimer fatty alcohol based polyester polyol, the foam processing margin is considerably improved. In this way, flexible foams can be produced within a wide density range, more particularly within a range of 20 to 150 kg/m³, and within a broader range of air permeabilities, without having to add any lipophilic filler, without having to make the foam more rigid by increasing the functionality of the isocyanate component and without having to use a low NCO index. It is thus possible to produce foams having low fogging or VOC (Volatile Organic Compounds) emission values. The lipophilic filler contributes indeed to the fogging and VOC value of the foam, which is especially important for automotive applications.

The possibility of adding a non-hydrophobic polyester or polyether polyol to a hydrophobic dimer acid based polyester polyol is already mentioned briefly in paragraph [0035] of US 2006/0213608. However, no examples are given of such a combination. Moreover, there is even explicitly stated in this paragraph that such a combination is a less preferred embodiment and that any non-hydrophobic polyol is to be used in a limited amount. Based on these teachings, a skilled person would thus not add a non-hydrophobic polyether polyol and certainly not in the amounts used in the process according to the present invention.

The possibility to add a non-hydrophobic polyester or polyether polyol to a hydrophobic dimer acid based polyol is also mentioned in US 4 264 743. However, in the only example of such a combination, a very large portion of lipophilic filler is used, namely 150 parts per 100 parts of polyol compounds. Moreover, the dimer acid based polyol is not a polyester polyol but a polyether polyol. Both the dimer acid derived polyether polyol and the polyether polyol further contain polyoxypropylene polyether chains, which is clearly intended to avoid any compatibility problems which a skilled person would expect to occur between a polyether polyol and a polyester polyol. Consequently, based on the teachings of US 4 264 743 it is not obvious at all for a skilled person to use relatively large amounts of a non-hydrophobic polyether polyol in combination with a hydrophobic polyester polyol in order to improve the foam processing margin.

Due to the presence of the hydrophobic dimer fatty acid chain residues in the foam, the foam obtained by the process according to the invention can be used as a waterproof material, for example as a flexible sealing material in particular in the fender, ventilator, airconditioning joints and other parts in automobiles, as well as in ships, refrigerators and other assembly products. In order to further improve the waterproofing properties, a lipophilic filler can be added but this within the claimed limits. The foams can also be used for seat cushions and as foam insulation such as in door panels and headliners. An advantage of the foams according to the invention is that they can be adhered to other layers by flame lamination. When they have a higher density, they provide also a good sound insulation and can thus compete with other high density sound insulation materials.

An additional advantage of the addition of the non-hydrophobic polyether polyol to the dimer fatty acid or dimer fatty alcohol based polyester polyol, is that the hardness of the foam can be reduced without having to lower the NCO index to a value below 0.90. In this way good mechanical properties such as the tensile strength, tear resistance and compression set can still be achieved. In a preferred embodiment of the process according to the invention, the reaction mixture is formulated so that the CLD hardness at 40% deflection of the flexible polyurethane foam is smaller than 20 kPa, preferably smaller than 15 kPa and more preferably smaller than 10 kPa.

Preferably, the isocyanate component has an average (number average) functionality of less than 2.5, preferably of less than 2.3. It comprises preferably TDI (toluene diisocyanate).

Using an isocyanate component with a lower functionality, results in a softer foam. The same is true for the isocyanate reactive component, which has therefore preferably an average (number average) functionality of between 2 and 4, more preferably of between 2 and 3.

In a further preferred embodiment of the process according to the invention, the molar ratio of the isocyanate groups to the total of the isocyanate reactive groups is more than 0.90 and preferably more then 0.95.

Due to the less interrupted three-dimensional polymer network which can be achieved in this way, the foam properties are better, in particular the compression set and also the tensile strength and tear resistance.

The invention also relates to a flexible foam which is obtained by the process according to the invention.

This foam has preferably a compression set at 50%, determined in accordance with ISO 1856, of less than 10%, preferably of less than 7% and more preferably of less than 5%.

Other particularities and advantages of the invention will become apparent from the following description of some particular embodiments of the process and the foam obtained by that process according to the present invention.

The invention is directed to a process for preparing a flexible polyurethane foam. This foam has preferably a CLD hardness at 40% deflection, measured in accordance with ISO 3386, of less than 20 kPa, preferably of less than 15 kPa, and more preferably of less than 10 kPa. The CLD 40% hardness of the foam is preferably higher than 0.5 kPa.

For preparing the foam according to the invention, a reaction mixture or in other words a foamable composition is prepared from an isocyanate component which comprises at least one polyisocyanate compound, containing at least two isocyanate groups, and from an isocyanate reactive component containing one or more isocyanate reactive compounds which have at least two isocyanate reactive groups, in particular hydroxyl groups. A blowing agent is added to the reaction mixture in such an amount that the foam has a density comprised between 20 and 150 kg/m³. The density of the foam is preferably lower than 130 kg/m³ and more preferably lower than 110 kg/m³. The blowing agent usually comprises water and may additionally comprise a physical blowing agent. Preferably, the blowing agent only contains water.

The foam formulation may contain one or more of the additives conventional to polyurethane foam formulations. Such additives include catalysts, for example tertiary amines and tin compounds, surface-active agents and foam stabilisers, for example siloxane-oxyalkylene copolymers, flame retardants, organic and inorganic fillers, pigments, agents for suppressing the so-called boiling-foam effect such as poly-dimethylsiloxanes, and internal mould release agents for moulding applications.

The known one-shot, semi-prepolymer or full prepolymer techniques may be used together with conventional mixing equipment and the foams may be produced in the form of slabstock, mouldings and the like. When the prepolymer techniques are employed each of the different isocyanate reactive compounds alone or in a mixture may be used to pre-react with the polyisocyanate compound. The amounts indicated are in such a case calculated on the isocyanate reactive compound or compounds in the prepolymer and the isocyanate reactive compound or compounds in the remaining part of the isocyanate reactive component. In the one-shot technique, the isocyanate reactive composition is reacted with the isocyanate component simultaneously with the other components, in particular with the water as blowing agent.

An important feature of the foam produced by the process according to the invention is that it is made starting from renewable resources, more particular from natural/biological materials such as vegetable or animal oils or fats. The foam obtained by the process according to the present invention thus preferably contains at least 10%, more preferably at least 15% and most preferably at least 20% of renewable carbon. This renewable carbon content can be determined using ASTM-D6866 which is based on a measurement of the ¹⁴C/¹²C ratio, the ¹⁴C originating from biological materials whilst the ¹²C originates from fossil sources. The foam according to the invention preferably contains even higher amounts of renewable carbon, in particular more than 30% or even more than 40%.

Polyester polyols are normally produced by a condensation reaction between at least one polycarboxylic acid and at least one polyalcohol. Dicarboxylic acids and diols are preferred. The polyester polyol used in the present invention is formed from a condensation reaction between at least one dimer fatty acid and/or at least one dimer fatty alcohol. The term dimer fatty acid is well known in the art and refers to the dimerisation product of mono- or polyunsaturated fatty acids and/or esters thereof. Preferred dimer fatty acids are dimers of C₁₀ to C₃₀, more preferably C₁₂ to C₂₄, particularly C₁₄ to C₂₂, and especially C₁₈ alkyl chains. Suitable dimer fatty acids include the dimerisation products of oleic acid, linoleic acid, linolenic acid, palmitoleic acid, and elaidic acid. The dimerisation products of the unsaturated fatty acid mixtures obtained in the hydrolysis of natural fats and oils, e.g. sunflower oil, soybean oil, olive oil, rapeseed oil, cottonseed oil and tall oil, may also be used. Hydrogenated, for example by using a nickel catalyst, dimer fatty acids may also be employed.

In addition to the dimer fatty acids, dimerisation usually results in varying amounts of oligomeric fatty acids (so-called "trimer") and residues of monomeric fatty acids (so-called "monomer"), or esters thereof, being present. The amount of monomer can, for example, be reduced by distillation. Suitable dimer fatty acids have a dicarboxylic (or dimer) content of greater than 60%, preferably greater than 75%, more preferably in the range from 80 to 96%, particularly 85 to 92%, and especially 87 to 89% by weight. The trimer content is suitably less than 40%, preferably in the range from 2 to 25%, more preferably 5 to 15%, particularly 7 to 13%, and especially 9 to 11 % by weight. The monomer content is preferably less than 10%, more preferably in the range from 0.2 to 5%, particularly 0.5 to 3%, and especially 1 to 2% by weight. All of the above % by weight values are based on the total weight of trimer, dimer and monomer present.

The dicarboxylic acid component of the polyester polyol may also comprise non-dimeric dicarboxylic acids (hereinafter referred to as non-dimeric acids). The non-dimeric acids may be aliphatic or aromatic (such as phthalic acid, isophthalic acid and terephthalic acid), and include dicarboxylic acids and the esters, preferably alkyl esters, thereof, preferably linear dicarboxylic acids having terminal carboxyl groups having a carbon chain in the range from 2 to 20, more preferably 6 to 12 carbon atoms, such as adipic acid, glutaric acid, succinic acid, pimelic acid, suberic acid, azelaic acid, sebacic acid, heptane dicarboxylic acid, octane dicarboxylic acid, nonane dicarboxylic acid, decane dicarboxylic acid, undecane dicarboxylic acid, dodecane dicarboxylic acid and higher homologs thereof. Adipic acid is particularly preferred. A monomeric dicarboxylic acid anhydride, such as phthalic anhydride, may also be employed as the or as part of the non-dimeric acid component.

The polyester polyol is preferably formed from acids which consist for at least 50 mol %, preferably for at least 70 mol % and more preferably for at least 90 mol % of the dimer fatty acid or acids. The polyalcohol component of the polyester polyol used in the present invention suitably has a molecular weight higher than 50 but smaller than 400, preferably smaller than 300 and more preferably smaller than 200. The polyalcohol component may comprise polyols such as pentaerythritol, triols such as glycerol and trimethylolpropane, and preferably diols. Suitable diols include straight chain aliphatic diols such as ethylene glycol, diethylene glycol, 1,3-propylene glycol, dipropylene glycol, 1,4-butylene glycol, 1,6-hexylene glycol, branched diols such as neopentyl glycol, 3-methyl pentane glycol, 1,2-propylene glycol, and cyclic diols such as 1,4-bis(hydroxymethyl)cyclohexane and (1,4-cyclohexane-dimethanol). Diethylene glycol is a particularly preferred diol.

The polyol component may also comprise a dimer fatty diol. Dimer fatty acids are mentioned above in relation to the dicarboxylic acid component, and dimer fatty diols can be produced by hydrogenation of the corresponding dimer fatty acid. The same preferences above for the dimer fatty acid apply to the corresponding dimer fatty diol component of the polyester. In particular, when the polyester polyol is formed from at least one dimer fatty alcohol, in combination with one or more acids, no other alcohols are used or only a relatively small amount thereof so that the alcohols used to produce the polyester polyol consist for at least 50 mol %, preferably for at least 70 mol % and more preferably for at least 90 mol % of the dimer fatty alcohol. Mixtures of polyester polyols made of dimer fatty acids and polyester polyols made of dimer fatty alcohols can also be used. A polyester polyol can even be made both from a dimer fatty acid and a dimer fatty alcohol, again optionally in combination with other acids and/or alcohols. In this case, the minimum mole percentages indicated hereabove relates only to the dimer fatty acid or to the dimer fatty alcohol, more particularly this compound for which the mol percentage in the polyester polyol is the largest.

The polyester polyol is preferably formed from dicarboxylic acid to diol starting materials at a molar ratio in the range from 1/1.0 to 5.0, more preferably 1/1.05 to 3.0, particularly 1/1.1 to 2.0, and especially 1/1.2 to 1.4. Thus, the diol is preferably present in molar excess so as to obtain a polyester polyol terminated at both ends with OH groups.

The polyester polyol preferably has a molecular weight number average in the range from 1000 to 5000 and more preferably in the range from 1200 to 3000. It preferably comprises, on average, per molecule at least one and more preferably at least two dimer fatty chains. The polyester polyol preferably comprises at least four ester bonds. The number average functionality of the polyols derived from dimer acid is usually in the range from 1.6 to 4.0, and preferably in the range from 1.9 to 3.0, per molecule. The polyester polyol preferably has a hydroxyl value in the range from 10 to 100, more preferably in the range from 50 to 90 and most preferably from 60 to 80 mgKOH/g. The term "hydroxyl number" indicates the number of milligrams KOH which are equivalent to one gram of polyol sample so that the equivalent weight of the polyol = 56100 / hydroxyl number.

In the process according to the invention, a small amount of lipophilic filler may be added to the reaction mixture, in particular in order to increase the water-repellent properties of the foam and/or in order to improve the processing margin. Since the lipophilic filler contributes to the VOC content, and thus to the undesired emission and fogging properties thereof, only a small amount of lipophilic filler is added, in particular less than 35 parts by weight, preferably less than 30 parts by weight, more preferably less than 25 parts by weight and most preferably less than 15 parts by weight, per 100 parts by weight of isocyanate reactive compounds, or no lipophilic filler is added at all.

The lipophilic filler includes among others a substance consisting substantially of hydrocarbons and having a melting or softening point of 150 °C or lower and a boiling point of 200°C or higher at atmospheric pressure, such as paraffin, waxes, coal tar, asphalt, and petroleum resins, and the like prepared by polymerizing a C₄ -C₉ cut obtained as a by-product in naphtha cracking, polybutene, low molecular weight butyl rubber, dicarboxylic acid diesters, oils such as extender oil, and animal or vegetable oils.

In the process according to the present invention, the amount of lipophilic filler can be reduced, or it can be entirely omitted, due to the fact that a non-hydrophobic polyether polyol, i.e. a polyether polyol which is free of dimer fatty chains, is added to the hydrophobic dimer fatty acid or dimer fatty alcohol derived polyester polyol. The isocyanate reactive compounds contain, per 100 parts by weight thereof, 5 to 75 parts by weight of the polyether polyol or polyols, and 25 to 95 parts by weight of the dimer fatty acid or dimer fatty alcohol based polyester polyol or polyols (this amount include also any amount of polyester polyol which is based on the monomer fatty acid/alcohol or tri- or polymer fatty acid/alcohol which may be comprised in the dimer fatty acid/alcohol). By the use of such amounts of polyether polyol the processing margin could be improved, without having to use a lipophilic filler, so that it is possible to produce polyurethane foams which have good mechanical properties over a broad density range (from 20 to 150 kg/m³). Due to the presence of the polyether polyol, the functionality of the isocyanate component and of the isocyanate reactive component can be kept sufficiently low to be able to produce a soft foam. Moreover, the NCO index does not have to be lowered to reduce the hardness of the foam, which may otherwise have a negative effect on the mechanical properties such as tensile strength, tear resistance and compression set. Moreover, the addition of the polyether polyol allows a better control of the air permeability of the produced foam, and thus allows to avoid foam shrinkage (too closed cells) or internal splits in the foam (too open foam).

The isocyanate reactive components, including the dimer fatty acid or dimer fatty alcohol derived polyester polyol or polyols and the polyether polyol or polyols, preferably have a number average functionality of between 2 and 4, more preferably between 2 and 3, isocyanate reactive groups per polyol molecule.

As polyether polyol, the polyether polyols which are used for producing conventional flexible polyurethane foams can be used. Most common are the polyoxyalkylene polyether polyols which are usually addition products of propylene oxide and/or ethylene oxide on low molecular weight initiators which determine the "nominal" functionality of the polyether polyol. The equivalent weight of the polyether polyols is usually within the range of 500 to 10000, and preferably within the range of 750 to 3000.

The polyisocyanate component comprises usually only one but may comprise more than one polyisocyanate compounds (= polyisocyanates). Organic polyisocyanates which are conventionally used in the preparation of flexible polyurethane foams include aliphatic, cycloaliphatic and araliphatic polyisocyanates, as well as aromatic polyisocyanates, such as the commercial TDI (toluene diisocyanate), MDI (diphenylmethane diisocyanate), and crude or polymeric MDI.

Polymeric MDI may contain at least 70 % by weight of pure MDI (4,4'-isomer or isomer mixture) and up to 30 % by weight of the so-called polymeric MDI containing from 25 to 65 % by weight of diisocyanates, the remainder being largely polymethylene polyphenylene polyisocyanates having isocyanate functionalities greater than 2.

Modified isocyanates are also useful. Such isocyanates are generally prepared through the reaction of a commercial isocyanate, for example TDI or MDI, with a low molecular weight diol or amine. Modified isocyanates can also be prepared through the reaction of the isocyanates with themselves, producing isocyanates containing allophanate, uretonimine, carbodiimide or isocyanurate linkages. Modified forms of MDI including polyurea dispersions in MDI have for instance been described in EP-A-0 103 996.

Since process according to the invention is intended to produce a flexible polyurethane foam, which has a relatively small hardness, the number average functionality of the isocyanate component is preferably rather small, in particular smaller than 2.5 and preferably smaller than 2.3. The isocyanate component preferably comprises TDI.

The isocyanate component is preferably used in such an amount with respect to the isocyanate reactive components that the NCO index, i.e. the molar ratio of the isocyanate groups to the total of the isocyanate reactive groups, is higher than 0.90 and preferably higher than 0.95. Such a higher NCO index enables to achieve better mechanical properties, in particular a better compression set. The foam produced by the process according to the present invention preferably has a compression set at 50%, determined in accordance with ISO 1856, of less than 10%, preferably of less than 7% and more preferably of less than 5%. Notwithstanding the relatively high NCO index, the process according to the invention enables to produce relatively soft polyurethane foams by the use of the polyether polyol in combination with the dimer fatty acid or dimer fatty alcohol derived polyester polyol.

To increase the compatibility between these two polyols, the polyether polyol is preferably a quasi polymer polyol which has free isocyanate reactive groups (hydroxyl groups) and which is obtained by a prepolymerisation of at least a portion with the polyether polyol or polyols with a portion of the isocyanate compound or compounds.

The flexible foams obtained by the process according to the present invention can be produced, as explained hereabove, within a broad range of densities. It is more particularly possible to produce, with less than 35 parts by weight of lipophilic filler per 100 parts by weight of isocyanate reactive compounds or even with no lipopohilic filler, flexible polyurethane foams which have a density lower than 45 kg/m³, or even lower than 40 kg/m³, or which have a density higher than 65 kg/m³, or even higher than75 or 85 kg/m³.

The invention will now be illustrated by means of the following examples.

### Examples

### Comparative Example 1: Dimer acid polyol without lipophilic filler or polyether polyol (see Table 1)

When dimer acid polyol is used solely, this is without addition of polyether polyol or lipophilic filler, the foam has a poor processability. This not only holds for less conventional low and high density foams, which are generally recognised as being more critical in processing, but was also observed for foams with medium densities:

Polyurethane foams were prepared from 100 parts of a polyol, based on a C₃₂₋₃₆ fatty acid dimer and having an OH number of 70 mg KOH/g and a molecular weight of 1600-1700 g/mol, 1.1 parts of silicone foam stabilizer, 0.3 parts of amine catalyst (triethylenediamine and bis(dimethylaminoethyl)ether), 0.25 parts of stannous octoate, and toluene diisocyanate at an isocyanate index of 110. 2.1 parts of water were used to obtain a density of approximately 43 kg/m³.

To evaluate the foam processing margin, the ratio of toluene-2,4-diisocyanate to toluene-2,6-diisocyanate was varied. All resulting foams had a density between 41 and 43 kg/m³ and an air permeability between 1 and 5 l/dm².min (at 200 Pa air pressure and 10 mm sample thickness). Regardless of the isocyanate isomers ratio, these foams suffered from internal splits, while being close to shrinkage (low air permeability). It was not found possible to improve the foam processability through adaptations in catalysis, or isocyanate index.

### Comparative Examples 2-4: Dimer acid polyol in combination with paraffin fillers, without addition of polyether polyol (see Table 1)

Flexible polyurethane foams were prepared from 75 parts by weight of a dimer acid polyester polyol having a hydroxyl number of 70 and a molecular weight of 1600-1700 g/mol, 25 parts of paraffin oil, adequate amounts of triethylenediamine, bis(dimethylaminoethyl)ether, stannous octoate, water, and a silicone based foam stabiliser, and toluene diisocyanate at uselevels determined by the indicated indexes and water levels (table 1).

As also revealed in US 4 264 743, flexible polyurethane sealing foams can be obtained through the combination of dimer acid polyol with lipophilic hydrocarbon additives. However, when doing so, the density should be tuned around 50-55 kg/m³. Foams with densities lower than 45 kg/m³ tend to show internal splits, as illustrated by comparative example 3. Foams with densities over 65 kg/m³ lead to shrinkage, as illustrated by comparative example 4, unless a high amount of lipophilic filler (more than 30 parts per hundred parts by weight of polyol) is used. Given that emission and fogging properties and also mechanical properties such as compression set deteriorate with increasing amount of lipophilic filler, a use level of less than 30 pph is desirable.

**Table 1: Formulations and results of Comparative Examples 1 to 4 and Example 1.**

| *Parts by wt.* | **Comp. Ex. 1** | **Comp. Ex. 2** | **Comp. Ex. 3** | **Comp. Ex. 4** | **Ex. 1** |
|---|---|---|---|---|---|
| polyether polyol | 0 | 0 | 0 | 0 | 60 |
| dimer acid polyol | 100 | 75 | 75 | 75 | 40 |
| Parts of paraffin oil | 0 | 25 | 25 | 25 | 0 |
| Index | 110 | 108 | 110 | 100 | 110 |
| water | 2.1 | 2.3 | 3.1 | 1.2 | 2.1 |
| Processability | Internal splits | OK | Internal splits | Too closed foam | OK |
| Process margin (ratio 2,4-/2,6-TDI isomer) | none | 1.9-2.2 | none | poor | 2.1-2.8 |
| Density (kg/m³) | 42.8 | 51.8 | 28.5 | 77.3 | 42.1-43.0 |
| Air permeability (l/dm2.min, at 200Pa) | 3 | 10 | 115 | 0.1 | 35-129 |
| CLD Hardness 40% (kPa) | / | 5.4 | / | / | 5.6 |

### Example 1: Dimer acid polyol in combination with conventional ether polyol (see Table 1).

The chemical formulation of example 1 only differs from comparative example 1 in the used polyol mix. Through the combination of a polyether and a dimer acid polyol it is here proven possible to obtain flexible foam with a broad processing margin, thus having excellent processability. In particular it was possible to increase the air permeability of the foam so that the processing margin is broader since the air permeability of the foam may be reduced without causing foam shrinkage problems.

### Comparative Example 5: Conventional ether foam (see Table 2)

Comparative Example 5 relates to a flexible ether foam prepared using a conventional 3000 molecular weight glycerol propylene oxide adduct with hydroxyl value 56 as the sole polyol component. TDI was used as the isocyanate component. Amine catalysis consisted of triethylenediamine, bis(dimethylaminoethyl)ether, and dimethylamine ethanol. Stannous octoate was used as tin catalyst and a standard polyalkyl siloxane copolymer as silicone surfactant. 2.45 parts by weight of water were added per 100 parts of polyol.

### Comparative example 6: Conventional ester foam (see Table 2)

Comparative Example 6 relates to a flexible ester foam prepared using a conventional polyester polyol based on adipic acid and diethylene glycol with glycerol as branching agent, which has a hydroxyl value of 60. TDI was used as the isocyanate component. As amine catalysis a combination of dimethyl piperazine with N-ethylmorpholine was applied. A standard polyalkyl siloxane copolymer was used as silicone surfactant with an anionic non silicone surfactant as additional foam stabiliser. 2.4 parts by weight of water were added per 100 parts of polyol.

### Examples 2 to 9: Dimer acid polyol in combination with conventional ether polyol (see Tables 2 and 3).

In these examples, a polyol combination based on a polyester polyol derived from a fatty acid dimer, and a polyether polyol was used. The components of the reaction mixture were the following:
- Polyester polyol compound based on a C₃₂₋₃₆ dimer acid with a molecular weight of 1600-1700 g/mol and an OH number of 70.
- A polyol of the polyether type having the following characteristics:
   ■ Polyol A: Glycerol propylene oxide (85-90%) - ethylene oxide (10-15%) adduct, molecular weight 3500 g/mol, OH number 48.
   ■ Polyol B: glycerol propylene oxide adduct, molecular weight 3000 g/mol, OH number 56.
   ■ Polyol C: polystyrene-acrylonitrile filled (42%) propylene oxide adduct, OH number 34.
- Polyisocyanate compound: TDI (toluene diisocyanate), mixtures of 2,4-TDI and 2,6-TDI isomers.
- Foaming agent: water
- Foam stabiliser: polyalkyl siloxane copolymer
- Catalysis:
   ■ Amine catalysis is based on mixtures of
      Dabco 33LV = 33% triethylene diamine in dipropyleneglycol DMAE = dimethylamine ethanol
      Niax A133 = 23% bis(dimethylaminoethyl)ether in dipropyleneglycol
   ■ Tin based gelling catalyst.
   In Example 9 a paraffinic process oil with a pour point of -5°C was added as a hydrophobic additive (lipophilic filler).

Examples 2 and 3 in comparison to Comparative Example 5 show that the introduction of a dimer fatty acid polyol does not deteriorate the mechanical properties of the foam. Mechanical properties were found to improve with increasing amount of dimer fatty acid polyol. Dimer fatty acid / polyether foams, such as examples 2 and 3, have the additional advantage that a high renewable content is achievable without deterioration of the mechanical properties after steam autoclave ageing (3 times 5 hours at 120°C). While standard ester foams, such as comparative example 6, suffer from hydrolysis in humid conditions, dimer acid based foams thank an improved hydrolytic stability to the presence of bulky fatty acid chains (C₃₂₋₃₆ or more) between the polyol ester bonds.

**Table 2: Formulations, mechanical properties, and mechanical properties after steam autoclave ageing, of Comparative Examples 5 and 6 versus Examples 2 and 3.**

| | **Method** | **Comp. Ex. 5** | **Comp. Ex. 6** | **Ex. 2** | **Ex. 3** |
|---|---|---|---|---|---|
| Type of polyether polyol | | B | / | B | B |
| Parts by wt. of polyether polyol | | 100 | 0 | 55 | 20 |
| Parts by wt. of dimer acid polyol | | 0 | 0 | 45 | 80 |
| Parts by wt. of conv. ester polyol | | 0 | 100 | 0 | 0 |
| Index | | 108 | 114 | 110 | 106 |
| Parts by wt. of water | | 2.45 | 2.4 | 2.1 | 2.0 |
| Renewable carbon (%) | ASTM D6866 | 0 | 0 | 32 | 55 |
| Density (kg/m³) | ISO 845 | 37.5 | 39.1 | 41.0 | 44.7 |
| CLD Hardness 40% (kPa) | ISO3386 | 2.9 | 4.8 | 5.7 | 6.2 |
| Compression set 50% (%) | ISO1856A | 1.8 | 2.9 | 3.0 | 3.5 |
| Tear resistance (N/cm) | ASTM-D 3574 | 3.1 | 6.2 | 3.4 | 5.2 |
| Elongation (%) | ISO 1798 | 207 | 375 | 222 | 271 |
| Tensile strength (kPa) | | 104 | 225 | 137 | 204 |

| ***Humid ageing*** | | | | | |
|---|---|---|---|---|---|
| % change of Hardness 40% | ISO3386 | -70 | -68 | -63 | -38 |
| % change of tensile strength | ISO 1798 | -55 | -73 | + 9 | -43 |
| % change of elongation | | +4 | -42 | -55 | +45 |
| compr. set 50% | ISO 1856A | 4.7 | 33.6 | 9 | 6.3 |

Examples 4-9 further demonstrate that through the combination of a dimer acid based polyester polyol with a conventional polyether polyol it is possible to make flexible polyurethane foam which does not suffer from processing defects such as internal tears and foam shrinkage. A broad density range has been covered, going from 27 kg/m³ in Example 4 to 93 kg/m³ in Example 6.

Example 7 and 8 illustrate that a polystyrene-acrylonitrile filled polyether polyol can be used to enhance the foam hardness.

Foams used in automotive applications generally need to pass certain fogging specifications. A well recognised test in that respect is the fogging reflection method DIN 75201/A measured after 3 hours at 100°C. A minimum reflection requirement which is relevant to the automotive market is 85%. This minimum is easily met for Examples 1 to 9 using the combination of a dimer acid polyol with a conventional polyether polyol. Comparative Example 2 suffers from inferior fogging reflection behaviour (less than 40%) due to the presence of 25 parts of lipophilic filler.

**Table 3: Formulations and results of Examples 4 to 9.**

| | **Method** | **Ex. 4** | **Ex. 5** | **Ex. 6** | **Ex. 7** | **Ex. 8** | **Ex. 9** |
|---|---|---|---|---|---|---|---|
| Type of polyether polyol | | B | A | B | B&C | B & C | B |
| Parts by wt. of polyether polyol | | 50 | 5 | 30 | 25 of B, 30 of C | 40 of B, 35 of C | 20 |
| Parts by wt. of dimer acid polyol | | 50 | 95 | 70 | 45 | 25 | 70 |
| Parts by wt. of paraffin oil | | 0 | 0 | 0 | 0 | 0 | 10 |
| Index | | 111 | 103 | 90 | 110 | 106 | 100 |
| Parts by wt. of wter | | 4 | 2.0 | 1.0 | 3.7 | 2.35 | 1.2 |
| Density (kg/m³) | ISO 845 | 27 | 47 | 93 | 27.5 | 43 | 77.8 |
| Air permeability (l/dm².min, measured at 200 Pa) | | 50 | 8 | 7 | 157 | 20 | 2.8 |
| CLD Hardness 40% (kPa) | ISO 3386 | 5.1 | 5.2 | 4.8 | 7.2 | 6.8 | 8.3 |

## Claims

1. A process for preparing a flexible polyurethane foam, which process comprises preparing a reaction mixture from an isocyanate component containing at least one polyisocyanate compound having at least two isocyanate groups and from an isocyanate reactive component containing one or more isocyanate reactive compounds having at least two isocyanate reactive groups, said isocyanate reactive compounds comprising one or more polyester polyols which are formed from at least one dimer fatty acid and/or from at least one dimer fatty alcohol,
**characterised in that**
- said isocyanate reactive compounds contain, per 100 parts by weight thereof, 25 to 95 parts by weight of said polyester polyols and 5 to 75 parts by weight of one or more polyether polyols which are free of dimer fatty chains,
- **in that** the reaction mixture is composed to comprise no lipophilic filler or, per 100 parts by weight of said isocyanate reactive compounds, at the most 35 parts by weight thereof and
- **in that** a blowing agent is added to the reaction mixture in such an amount that the flexible foam has a density comprised between 20 and 150 kg/m³_{.}

2. A process according to claim 1, **characterised in that** said dimer fatty component originates from a renewable source so that the foam has a renewable carbon content, determined in accordance with ASTM-D6866, of at least 10%, preferably at least 15%, and more preferably at least 20%.

3. A process according to claim 1 or 2, **characterised in that** said one or more polyester polyols are made by condensation of one or more alcohols with one or more acids, said one or more acids consisting for at least 50 mole %, preferably for at least 70 mole % and more preferably for at least 90 mole % of said at least one dimer fatty acid when the polyester polyol is formed from at least one dimer fatty acid and said one or more alcohols consist for at least 50 mole %, preferably for at least 70 mole % and more preferably for at least 90 mole % of said at least one dimer fatty alcohol when the polyester polyol is formed from at least one dimer fatty alcohol.

4. A process according to any one of the claims 1 to 3, **characterised in that** said one or more polyester polyols comprise on average, per molecule, at least one, preferably at least two dimer fatty chains.

5. A process according to any one of the claims 1 to 3, **characterised in that** said one or more polyester polyols comprise at least four ester bonds per molecule.

6. A process according to any one of the claims 1 to 4, **characterised in that** at least one of said polyester polyols is made by condensation of one or more alcohols with one or more acids which comprises said dimer fatty acid, said one or more alcohols having a molecular weight smaller than 400, preferably smaller than 300 and more preferably smaller than 250.

7. A process according to any one of the claims 1 to 5, **characterised in that** said reaction mixture is formulated so that the foam has a CLD hardness at 40% deflection, measured in accordance with ISO 3386, of less than 20 kPa, preferably less than 15 kPa and more preferably less than 10 kPa.

8. A process according to any one of the claims 1 to 6, **characterised in that** said isocyanate component has an average functionality of less than 2.5, preferably of less than 2.3 and comprises preferably TDI.

9. A process according to any one of the claims 1 to 8, **characterised in that** said isocyanate reactive component has an average functionality of between 2 and 4, preferably between 2 and 3.

10. A process according to any one of the claims 1 to 9, **characterised in that** said at least one dimer fatty acid and/or said at least one dimer fatty alcohol contains at least 20, preferably at least 24 and more preferably at least 28 carbon atoms.

11. A process according to any one of the claims 1 to 10, **characterised in that** the amount of blowing agent is such that the flexible foam has a density lower than 45 kg/m³ and more in particular lower than 40 kg/m³ or the amount of blowing agent is such that the flexible foam has a density higher than 65 kg/m³, in particular higher than 75 kg/m³ and more particularly higher than 85 kg/m³.

12. A process according to any one of the claims 1 to 11, **characterised in that** the molar ratio of the isocyanate groups to the total of the isocyanate reactive groups is more than 0.90 and preferably more than 0.95.

13. A process according to any one of the claims 1 to 12, **characterised in that** at least a portion of said one or more polyether polyols is prepolymerised with a portion of said at least one polyisocyanate compound to achieve a quasi polyol prepolymer having isocyanate reactive groups.

14. A flexible polyurethane foam obtained by the process according to any one of the previous claims.

15. A flexible polyurethane foam according to claim 14, **characterised in that** it has a compression set at 50%, determined in accordance with ISO 1856, of less than 10%, preferably of less than 7% and more preferably of less than 5%.
